# EUROPÄISCHE PATENTANMELDUNG

(11) **EP 1 318 165 A1**
(43) Veröffentlichungstag der Anmeldung: **11.06.2003**
(21) Anmeldenummer: 02025376.1
(22) Anmeldetag: 14.11.2002
(51) Int. Cl.: C08J 7/04, C09K 3/18

(54) **Lichtstreuende Werkstoffe die selbstreinigende Oberflächen aufweisen**

(30) Priorität: 06.12.2001 DE 10160054
(71) Anmelder: Creavis Gesellschaft für Technologie und Innovation mbH, 45772 Marl (DE)
(72) Erfinder: Nun, Edwin, Dr., 48727 Billerbeck (DE); Oles, Markus, Dr., 45525 Hattingen (DE)

(57) **Zusammenfassung**

Die vorliegende Erfindung betrifft lichtstreuende Werkstoffe, die selbstreinigende Eigenschaften aufweisen sowie ein Verfahren zu deren Herstellung.

Lichtstreuende Werkstoffe können vielseitig zur indirekten Beleuchtung eingesetzt werden, insbesondere zur indirekten Beleuchtung mit Tageslicht. Nachteilig an lichtstreuenden Werkstoffen gemäß dem Stand der Technik ist die schnelle Verschmutzung dieser Werkstoffe, da die Lichtstreuung üblicherweise durch ein Aufrauen der Oberfläche des Werkstoffes, z. B. durch Anätzen von Glas, erzielt wird. Durch eine gezielte Ausführung der Rauheit der Oberfläche kann erfindungsgemäß ein lichtstreuender Werkstoff hergestellt werden, der außerdem selbstreinigende Eigenschaften aufweist und vorzugsweise weitestgehend resistent gegenüber der Besiedlung durch Mikroorganismen ist, da er vorzugsweise antimikrobielle Eigenschaften aufweist. Auf diese Weise werden lichtstreuende Werkstoffe erhalten, die eine wesentlich längere Reinigungsintervalle als herkömmliche Werkstoffe aufweisen.

## Beschreibung

Die vorliegende Erfindung betrifft lichtstreuende Werkstoffe, die selbstreinigende Oberflächen, vorzugsweise selbstreinigende antimikrobielle Oberflächen aurweisen.

Lichtstreuenden Werkstoffen kommt in neuester Zeit wieder ein hoher Stellenwert zu, da es in vielen Fällen vorteilhaft ist, Räume mit Tageslicht zu versorgen, ohne dass eine direkte Sonneneinstrahlung stattfinden kann. So vertragen z. B. einige Pflanzen die direkte Sonneneinstrahlung nicht, weshalb viele Gewächshäuser zusätzlich zu Glasscheiben mit mechanischen Vorrichtungen zum Ausblenden der direkten Sonneneinstrahlung versehen werden.

Analog tritt auch bei direkter Sonneneinstrahlung durch ein transparentes Dach eines Wintergartens eine in der Fläche begrenzte Erwärmung auf. Für Menschen kann der Aufenthalt unter solchen Bedachungen mit wechselnden Licht- und Wärmeverhältnissen unangenehm, ja sogar gesundheitsgefährdend sein.

Um gesundheitsschädliche Einwirkungen fernzuhalten, hat der Gesetzgeber in Deutschland beispielsweise die Arbeitsstättenverordnung (ArbStättVO) erlassen. Dort sind im § 7 (ArbStättVO) die am Arbeitsplatz vorgeschriebenen minimalen Lichtverhältnisse definiert. Im § 9, Abs. 2 (ArbStättVO) vom 15.10.1995 ist gesetzlich festgeschrieben, dass Fenster und Oberlichter so beschaffen sein müssen oder mit Einrichtungen versehen werden müssen, dass die Räume gegen unmittelbare Sonneneinstrahlung abgeschirmt werden können.

Auch im Bereich der Nutztierhaltung sind diffuse Beleuchtungen vorteilhaft. Die artgerechte Haltung von Nutztieren erforderte größere Freiräume und geänderte Lichtverhältnisse für die Tiere. Sofern keine Freilaufflächen angeboten werden können, können durch helle Stallungen, die weder direkte Sonneneinstrahlung ermöglichen, noch künstliche Beleuchtungen während der hellen Tageszeit benötigen, durch diffuses Streuen des Sonnenlichtes an lichtdurchlässigen, Dachpartien deutliche Verbesserungen erzielt werden.

Werkstoffe mit lichtstreuender Wirkung sind allgemein bekannt. So werden insbesondere auf Flachdächern Kunststoffkuppeln eingesetzt, die nicht vollständig transparent sind. Häufig wird die lichtstreuende Wirkung durch Strukturieren bzw. Mattieren durch Aufrauen der Oberfläche dieser Werkstoffe erzielt. Das Mattieren kann sowohl mechanisch als auch chemisch, z. B. durch Ätzen erfolgen.

Die aufgerauten Oberflächen haben den Nachteil, dass diese Oberflächen sich relativ schnell mit Schmutz- oder Staubpartikeln zusetzen (Innen und Außen) und somit die durch den Werkstoff hindurchtretende Lichtmenge verringert wird. Bei Benetzung mit Wasser geht außerdem die lichtstreuende Wirkung zumindest teilweise verloren. In DE 42 18 215 wird dieser Nachteil umgangen, in dem ein Glasbaustein mit lichtstreuender Wirkung hergestellt wird, der die aufgeraute Oberfläche im Innern des Glasbausteins aufweist. Die Herstellung solcher Glasbausteine ist relativ aufwändig und nicht auf alle möglichen Werkstoffe zu übertragen.

Aus einem gänzlich anderen Gebiet der Technik sind Gegenstände mit extrem schwer benetzbaren Oberflächen, sogenannte Lotus-Effekt-Oberflächen bekannt, die eine Reihe von wirtschaftlich bedeutsamen Merkmalen aufweisen, insbesondere sind solche Oberflächen selbstreinigend. So ist die Reinigung von Oberflächen zeit- und kostenintensiv. Selbstreinigende Oberflächen sind somit von höchstem wirtschaftlichen Interesse. Haftmechanismen werden üblicherweise durch grenzflächenenergetische Parameter zwischen den beiden sich berührenden Oberflächen bedingt. In der Regel versuchen dabei die Systeme ihre freie Grenzflächenenergie zu erniedrigen. Liegen die freien Grenzflächenenergien zwischen zwei Komponenten an sich auch schon sehr niedrig, so kann allgemein davon ausgegangen werden, dass die Haftung zwischen diesen beiden Komponenten schwach ausgeprägt ist. Wichtig ist dabei die relative Erniedrigung der freien Grenzflächenenergie. Bei Paarungen mit einer hohen und einer niedrigen Grenzflächenenergie kommt es sehr auf die Möglichkeit der Wechselwirkungen an. So ist beispielsweise beim Aufbringen von Wasser auf eine hydrophobe Oberfläche es nicht möglich, eine merkliche Erniedrigung der Grenzflächenenergie herbeizuführen. Dies ist daran erkennbar, dass die Benetzung schlecht ist. Aufgebrachtes Wasser bildet Tropfen mit sehr großen Kontaktwinkeln. Perfluorierte Kohlenwasserstoffe, z. B. Polytetrafluorethlyen, haben eine sehr niedrige Grenzflächenenergie. Auf solchen Oberflächen haften kaum irgendwelche Komponenten, bzw. auf solchen Oberflächen abgelagerte Komponenten können sehr leicht wieder entfernt werden.

Der Einsatz von hydrophoben Materialien, wie perfluorierten Polymeren, zur Herstellung von hydrophoben Oberflächen ist bekannt. Eine Weiterentwicklung dieser Oberflächen besteht darin, die Oberflächen im µm-Bereich bis nm-Bereich zu strukturieren. US PS 5,599,489 offenbart ein Verfahren, bei dem eine Oberfläche durch Beschuss mit Partikeln einer entsprechenden Größe aufgeraut und anschließender Perfluorierung besonders abweisend ausgestattet werden kann. Ein anderes Verfahren beschreiben H. Saito et al in "Service Coatings International" 4, 1997, S. 168 ff. Hier werden Partikel aus Fluorpolymeren auf Metalloberflächen aufgebracht, wobei eine stark erniedrigte Benetzbarkeit der so erzeugten Oberflächen gegenüber Wasser mit einer erheblich reduzierten Vereisungsneigung festgestellt wurde.

Zahlreiche Veröffentlichungen zur Herstellung selbstreinigender Oberflächen existieren. Beispielhaft seien hier US-PS 3,354,022, WO 96/04132 und WO 00/58410 genannt. Derlei Oberflächen werden immer zur Aufrechterhaltung der Oberflächensauberkeit beschrieben und/oder beansprucht. Als Oberflächenverunreinigungen werden dabei in der Regel Stäube genannt. Anschließend werden diese durch bewegtes Wasser, sei es durch Regen, Sprühregen, kondensierendem Nebel oder durch künstliche Beregnung, beispielsweise durch einen Wasserstrahl aus einem Wasserschlauch entfernt, in dem diese Stäube, an den abrollenden Tropfen fixiert und mit dem abrollenden Tropfen von der Oberfläche entfernt wird. Die Oberflächen können auch transparente Materialien sein. Die Herstellung bzw. Verwendung von lichtstreuenden Werkstoffen mit selbstreinigenden Eigenschaften wird hingegen nicht beschrieben.

In EP 1040874 werden selbstreinigende Oberflächen beschrieben, die ab einer Strukturierung kleiner 400 nm transparent sind und eine hohe Transmission bzw. gute optische Eigenschaften aufweisen. Das Phänomen der Lichtstreuung ist in dieser Veröffentlichung allerdings nicht beschrieben. Die in EP 1040874 beschriebenen Oberflächen werden zumindest teilweise durch Prägen einer periodischen Struktur erhalten. Diese sind für die Herstellung von lichtstreuenden Werkstoffen gänzlich ungeeignet, da es bei periodischen Strukturen zur Ausbildung von Interferenzen kommen kann und somit eine diffuse Lichtstreuung nicht gegeben ist.

Aufgabe der vorliegenden Erfindung war es deshalb lichtstreuende Werkstoffe mit selbstreinigenden Eigenschaften zur Verfügung zu stellen.

Überraschenderweise wurde gefunden, dass transparente Werkstoffe sowohl mit lichtstreuenden als auch selbstreinigenden Eigenschaften ausgestatten werden können, wenn diese Werkstoffe in stochastischer Verteilung mit Partikeln mit einer Größe von 20 nm bis 100 µm beschichtet werden.

Gegenstand der vorliegenden Erfindung ist deshalb ein lichtstreuender Werkstoff auf Basis eines transparenten Werkstoffes mit einer künstlichen Oberflächenstruktur aus Erhebungen und Vertiefungen die eine partikuläre Beschichtung unter stochastischer Verteilung der Partikel an zumindest einer Oberfläche aufweist, wobei die Oberflächenstruktur lichtstreuende und selbstreinigende Eigenschaften und Erhebungen mit einer Höhe von 20 nm bis 100 µm und einem Abstand der Erhebungen von kleiner 100 µm aufweisen.

Außerdem ist Gegenstand der vorliegenden Erfindung ein Verfahren zur Herstellung von lichtstreuenden Werkstoffen mit einer künstlichen Oberflächenstruktur gemäß zumindest einem der Ansprüche 1 bis 7, die selbstreinigende Eigenschaften aufweisen, wobei eine partikuläre Beschichtung unter stochastischer Verteilung der Partikel auf zumindest einer Oberfläche des Werkstoffes aufgebracht wird, welches dadurch gekennzeichnet ist, dass die Oberflächenstruktur, die lichtstreuende und selbstreinigende Eigenschaften aufweist, Erhebungen mit einer Höhe von 20 nm bis 100 µm und einem Abstand der Erhebungen von kleiner 100 µm aufweist.

Ebenso ist Gegenstand der vorliegenden Erfindung die Verwendung von Werkstoffen gemäß zumindest einem der Ansprüche 1 bis 7 zur Herstellung von Oberlichter, Gewächshausverglasung, transparenten oder transluzenten Bedachungen, wie Bedachungen von Wintergärten, Bushaltestellen, Einkaufspassagen, Bohnhöfen oder Sportstadien, Diffusern und Lichtelementen in der Nutztierhaltungen sowie Oberlichter, Gewächshausverglasungen, Diffuser und Lichtelementen in der Nutztierhaltungen die Werkstoffe gemäß einem der Ansprüche 1 bis 7 aufweisen.

Die Haupteigenschaft der erfindungsgemäßen Werkstoffe ist - neben der beschriebenen Selbstreinigung und der möglichen Verhinderung des Mikroorganismenwachstums - die, das Licht diffus zu streuen. Bei der Beschichtung von Glasdächern mit Folien, die durch Prägen selbstreinigend ausgerüstet wurden, kann es über Interferenzbildung zu punktueller Überhitzung kommen aus denen in Gewächshäusern absterbende Pflanzenteile resultieren können. Die erfindungsgemäßen Werkstoffe haben den Vorteil, dass sie diesen Nachteil der Interferenzbildung vermeiden, in dem eine stochastische Verteilung der Partikel eingesetzt wird und damit eine nichtperiodische Oberflächenstruktur erzielt wird. Weisen die erfindungsgemäßen Werkstoffe Oberflächen hydrophobe und selbstreinigende Eigenschaften auf, so wird außerdem die Bildung von Wasserfilmen auf der Oberfläche verhindert, so dass eine sonst bei der Benetzung von durch Rauheit mattierten Oberflächen vorkommende Durchsichtigkeit bei Benetzung durch Wasser bei den Oberflächen der vorliegenden Erfindung nicht oder nur selten zu beobachten ist.

Die erfindungsgemäßen Werkstoffe mit selbstreinigenden, antimikrobiellen Oberflächen, die so ausgestattet sind, dass die an der Oberfläche fixierten Partikel das Licht streuen und so als Diffuser wirken können, werden den Forderungen der ArbStättVO gerecht.

Die erfindungsgemäßen Werkstoffe werden nachfolgend näher beschrieben, ohne dass die Werkstoffe auf diese Beschreibung beschränkt sein sollen. Die erfindungsgemäßen lichtstreuenden Werkstoffe auf Basis transparenter Werkstoffe mit einer künstlichen Oberflächenstruktur aus Erhebungen und Vertiefungen die eine partikuläre Beschichtung unter stochastischer Verteilung der Partikel an zumindest einer Oberfläche aufweist, wobei Oberflächenstruktur lichtstreuende und selbstreinigende Eigenschaften aufweist, zeichnen sich dadurch aus, dass die Oberflächenstruktur Erhebungen mit einer Höhe von 20 nm bis 100 µm und einem Abstand der Erhebungen von kleiner 100 µm aufweisen.

Besonders gute selbstreinigende Eigenschaften in Kombination mit guten lichtstreuenden Eigenschaften werden erzielt, wenn die Oberflächenstruktur hydrophobe Erhebungen mit einer Höhe von 50 nm bis 20 µm, vorzugsweise von 100 nm bis 10 µm und ganz besonders bevorzugt von 0,1 bis 5 µm und einem Abstand kleiner 100 µm, vorzugsweise einen Abstand von 50 nm bis 75 µm und ganz besonders bevorzugt von 500 nm bis 5 µm aufweisen.

Es kann vorteilhaft sein, wenn die Beschichtung antimikrobielle Eigenschaften aufweist. Solche mit antimikrobiellen Eigenschaften ausgestatteten, erfindungsgemäßen Werkstoffe haben den Vorteil, dass aus Ihnen hergestellte Gegenstände über einen längeren Zeitraum als herkömmliche Werkstoffe eine konstante diffuse Lichtmenge durchlassen, da die Oberfläche und damit die Lichtdurchtrittsfläche deutlich langsamer verschmutzt. Dies wird dadurch erreicht, dass die Anhaftung und Ausbreitung von biologischen Verschmutzungen, wie z. B. Bakterien, Pilzen und Algen deutlich verlangsamt wird und damit die selbstreinigenden Eigenschaften der Oberfläche des lichtstreuenden Werkstoffes länger wirksam erhalten bleiben. Die antimikrobiellen Eigenschaften werden vorzugsweise dadurch erzielt, dass die Beschichtung zumindest ein Material mit antimikrobiellen Eigenschaften aufweist. Als solche Materialien eignen sich insbesondere Homo- oder Copolymeren von Methacrylsäure-2-tert.butylaminoethylester, Methacrylsäure-2-diethylaminoethylester, Methacrylsäure-2-diethylaminomethylester, Acrylsäure-2-tert.-butylaminoethylester, Acrylsäure-3-dimethylaminopropylester, Acrylsäure-2-diethylaminoethylester, Acrylsäure-2-dimethylaminoethylester, Dimethylaminopropylmethacrylamid, Diethylamino-propylmethacrylamid, Acrylsäure-3-dimethylaminopropylamid, 2-Methacryloyloxyethyltrimethylammoniummethosulfat, Methacrylsäure-2-diethylaminoethylester, 2-Methacryloyloxyethyltrimethylammoniumchlorid, 3-Methacryloylaminopropyltrimethylammonium-chlorid, 2-Methacryloyloxyethyltrimethylammoniumchlorid, 2- Acryloyloxyethyl-4-benzoyldimethylammoniumbromid, 2- Methacryloyloxyethyl-4-benzoyldimethylammoniumbromid, 2-Acrylamido-2-methyl-1-propansulfonsäure, 2-Diethylaminoethylvinylether oder 3-Aminopropylvinylether.

Die Erhebungen und Vertiefungen der Oberflächenstruktur werden dadurch gebildet, dass die Oberfläche des Werkstoffes auf ihr aufgebrachte Partikel in stochastischer Verteilung aufweist.

Die Partikel sind vorzugsweise mittels eines Trägersystems auf der Oberfläche fixiert, wobei das Trägersystem transparent oder diffus transparent bzw. transluzent sein muss. Die Partikel sind vorzugsweise hydrophobe Partikel. Es kann aber auch vorteilhaft sein, wenn die Partikel eine Mischung von hydrophoben Partikeln und Partikeln mit antimikrobiellen Eigenschaften sind. Ganz besonders bevorzugt weist die Oberfläche eine Mischung von hydrophoben Partikeln und Partikeln mit antimikrobiellen Eigenschaften auf, die einen Gehalt an Partikeln mit antimikrobiellen Eigenschaften von 0,01 bis 25 Gew.-%, vorzugsweise von 0,1 bis 20 Gew.-% und ganz besonders bevorzugt von 1 bis 15 Gew.-%, bezogen auf die Partikelmischung aufweist.

Vorzugsweise werden hydrophobe- oder hydrophobierte Partikel eingesetzt, die einen Partikeldurchmesser von 0,02 bis 100 µm, besonders bevorzugt von 0,2 bis 50 µm und ganz besonders bevorzugt von 0,3 bis 30 µm aufweisen. Die erfindungsgeinäßen Oberflächenstrukturen weisen die einzelnen Partikel auf der Oberfläche in Abständen von 0 - 10 Partikeldurchmesser, insbesondere von 0- 3 Partikeldurchmesser, auf. Die antimikrobiellen, hydrophilen Partikel können vorzugsweise Partikeldurchmesser von 1 bis 2000 µm, bevorzugt 2 bis 1000 µm, und ganz besonders bevorzugt von 50 bis 500 µm aufweisen.

Um die Interferenzbildung weitestgehend auszuschließen kann es vorteilhaft sein, wenn die Oberflächenstruktur durch Partikel bzw. Partikelfraktionen gebildet werden, die unterschiedliche Partikelgrößen bzw. -durchmesser aufweisen. Vorzugsweise weist die Oberflächenstruktur zumindest zwei Partikelfraktionen auf, deren mittlere Partikelgröße sich um einen Faktor von 2 bis 10, vorzugsweise um einen Faktor von 4 bis 7 unterscheidet. Hierbei ist darauf zu achten, das die Verteilung der Teilchen vorzugsweise nicht sehr scharf ist.

Besonders vorteilhaft für die Vermeidung von Interferenzerscheinungen an den Oberflächen ist eine breite Verteilung der Partikelgröße. Eine Verteilung der Partikel zwischen 0,1 µm und 2µm verhindert hierbei die Entstehung von Interferenzerscheinungen an der Oberfläche fast vollständig. Hier bei ist es nebensächlich ob die Partikelgröße durch zusammenlagern von Primärteilchen (Agglomeration) oder durch unterschiedliche Primärteilchengrößen entsteht.

Die Partikel können auch als Aggregate oder Agglomerate vorliegen, wobei gemäß DIN 53 206 unter Aggregaten flächig oder kantenförmig aneinander gelagerte Primärteilchen (Partikel) und unter Agglomeraten punktförmig aneinander gelagerte Primärteilchen (Partikel) verstanden werden. Als Partikel können auch solche eingesetzt werden, die sich aus Primärteilchen zu Agglomeraten oder Aggregaten mit einer Größe von 0,2 - 100 µm zusammenlagern.

Es kann vorteilhaft sein, wenn die eingesetzten hydrophoben- oder hydrophobierten Partikel eine strukturierte Oberfläche haben. Vorzugsweise werden diese Partikel, die eine unregelmäßige Feinstruktur im Nanometerbereich auf der Oberfläche aufweisen, eingesetzt. Die Feinstruktur der Partikel ist vorzugsweise eine zerklüftete Struktur mit Erhebungen und/oder Vertiefungen im Nanometerbereich. Vorzugsweise weisen die Erhöhungen im Mittel eine Höhe von 20 bis 500 nm, besonders bevorzugt von 50 bis 200 nm auf. Der Abstand der Erhöhungen bzw. Vertiefungen auf den Partikeln beträgt vorzugsweise weniger als 500 nm, ganz besonders bevorzugt weniger als 200 nm. Diese Vertiefungen, wie z. B. Krater, rissartige Einkerbungen, Kerben, Spalten, Löcher und Kavitäten unterstützen die wirksame Struktur der Partikel. Weitere Strukturmerkmale, wie Hinterschnitte in den Vertiefungen oder Kombinationen aus den verschiedenen Vertiefungen, sind wirksamskeitssteigernd.

Als hydrophobe Partikel können transparente und/oder transluzente Partikel eingesetzt werden, die zumindest ein Material, ausgewählt aus Silikaten, dotierten oder pyrogenen Silikaten, Mineralien, Metalloxiden, Kieselsäuren oder Polymeren aufweisen. Als Partikel, insbesondere als hydrophobe Partikel, die eine unregelmäßige Feinstruktur im Nanometerbereich an der Oberfläche aufweisen, werden vorzugsweise solche Partikel eingesetzt, die zumindest eine Verbindung, ausgewählt aus pyrogener Kieselsäure, Aluminiumoxid, Siliziumoxid, Mischoxide pyrogenen Silikaten oder pulverförmige Polymeren aufweisen. Es kann vorteilhaft sein, wenn die erfindungsgemäße Oberfläche Partikel aufweist, die hydrophobe Eigenschaften aufweisen. Die hydrophoben Eigenschaften der Partikel können durch das verwendete Material der Partikel inhärent vorhanden sein. Es können aber auch hydrophobierte Partikel eingesetzt werden, die z. B. durch eine Behandlung mit zumindest einer Verbindung aus der Gruppe der Alkylsilane, Perfluoralkylsilane, Paraffine, Wachse, Fettsäureestern, funktionalisierte langkettige Alkanderivate oder Alkyldisilazane, hydrophobe Eigenschaften aufweisen.

Als Partikel mit antimikrobiellen Eigenschaften, die in der Regel hydrophile Eigenschaften ausweisen, werden vorzugsweise solche eingesetzt die Homo- oder Copolymere ausgewählt aus Methacrylsäure-2-tert.-butylaminoethylester, Methacrylsäure-2-diethylaminoethylester, Methacrylsäure-2-diethylaminomethylester, Acrylsäure-2-tert.-butylaminoethylester, Acrylsäure-3-dimethylaminopropylester, Acrylsäure-2-diethylaminoethylester, Acrylsäure-2-dimethylaminoethylester, Dimethylaminopropylmethacrylamid, Diethylamino-propylmethacrylamid, Acrylsäure-3-dimethylaminopropylamid, 2-Methacryloyloxyethyltrimethylammoniummethosulfat, Methacrylsäure-2-diethylaminoethylester, 2-Methacryloyloxyethyltrimethylammoniumchlorid, 3-Methacryloylaminopropyltrimethylammonium-chlorid, 2-Methacryloyloxyethyltrimethylammoniumchlorid, 2- Acryloyloxyethyl-4-benzoyldimethylammoniumbromid, 2- Methacryloyloxyethyl-4-benzoyldimethylammoniumbromid, 2-Acrylamido-2-methyl-1-propansulfonsäure, 2-Diethylaminoethylvinylether oder 3-Aminopropylvinylether aufweisen.

Der erfindungsgemäße Werkstoff bzw. die Oberfläche des Werkstoffes kann zumindest eine Fläche eines Formkörpers aus einem transparenten oder diffustransparenten Material, ausgewählt aus den Polymeren, wie z. B. Polyamiden, Polyesteramiden, Polyvinylchlorid, Polystyrolen, Polycarbonaten, Polyolefinen, Polysilikonen, Polysiloxanen, Polymethylmethacrylaten oder Polyterephthalaten sowie mineralischen Gläsern sein. Die Auflistung der polymeren Materialien ist nur beispielhaft und beschränkt sich nicht nur auf die gelisteten. Ausdrücklich werden aber Copolymere oder Polymerblends, sofern diese transparent erscheinen, beansprucht. Handelt es sich bei dem Formkörper um einen Formkörper aus Polymerem so kann es vorteilhaft sein, wenn dieser Formkörper, und damit die Oberfläche, ein Polymer mit antimikrobiellen Eigenschaften aufweist.

Erfindungsgemäße Werkstoffe können sowohl Halbzeuge, geformte Gegenstände oder Körper, Folien, Platten, Scheiben oder ähnliches sein. Der erfindungsgemäße lichtstreuende Werkstoff kann ein-, zwei- oder mehrseitig Oberflächen mit Oberflächenstrukturen, die selbstreinigende und lichtstreuende Eigenschaften aufweisen, aufweisen.

Die erfindungsgemäßen Werkstoffe werden vorzugsweise mit dem erfindungsgemäßen Verfahren zur Herstellung von lichtstreuenden Werkstoffen mit einer künstlichen Oberflächenstruktur, die lichtstreuende und selbstreinigende Eigenschaften aufweist, welches sich dadurch auszeichnet, dass eine Oberflächenstruktur die Erhebungen mit einer Höhe von 20 nm bis 100 µm und einem Abstand der Erhebungen von kleiner 100 µm aufweist, durch Aufbringen einer partikulären Beschichtung unter stochastischer Verteilung der Partikel auf zumindest eine Oberfläche des Werkstoffes erzeugt wird, hergestellt. Das Aufbringen der Beschichtung und das Fixieren der Partikel auf der Oberfläche kann auf eine dem Fachmann bekannte Art und Weise erfolgen. Als chemische Methode der Fixierung kann z. B. die Verwendung eines Trägersystems eingesetzt werden. Als Trägersystem kommen verschiedene Klebstoffe, Haftvermittler oder Lacke in Frage. Dem Fachmann ergeben sich weitere Trägersysteme oder chemische Fixiermethoden.

Es kann vorteilhaft sein, wenn bei der Herstellung der Oberflächenstrukturen zumindest ein Material eingesetzt wird, welches antimikrobielle Eigenschaften aufweist.

Das Material, welches antimikrobielle Eigenschaften aufweist kann sowohl in der Oberfläche des Werkstoffes, als auch im Trägersystem oder im Partikelsystem vorhanden sein. Vorzugsweise weist zumindest ein Teil der eingesetzten Partikel ein Material, welches antimikrobielle Eigenschaften aufweist, auf. Bevorzugt wird als antimikrobielles Material ein Homo- oder Copolymer hergestellt aus Methacrylsäure-2-tert.-butylaminoethylester, Methacrylsäure-2-diethylaminoethylester, Methacrylsäure-2-diethylaminomethylester, Acryl-säure-2-tert.-butylaminoethylester, Acrylsäure-3-dimethylaminopropylester, Acrylsäure-2-diethylaminoethylester, Acrylsäure-2-dimethylaminoethylester, Dimethylaminopropylmethacrylamid, Diethylamino-propylmethacrylamid, Acrylsäure-3-dimethylaminopropylamid, 2-Methacryloyloxyethyltrimethylammoniummethosulfat, Methacrylsäure-2-diethylaminoethylester, 2-Methacryloyloxyethyltrimethylammoniumchlorid, 3-Methacryloylaminopropyltrimethylammonium-chlorid, 2-Methacryloyloxyethyltrimethylammoniumchlorid, 2-Acryloyloxyethyl-4-benzoyldimethylammoniumbromid, 2- Methacryloyloxyethyl-4-benzoyldimethylammoniumbromid, 2-Acrylamido-2-methyl-1-propansulfonsäure, 2-Diethylaminoethylvinylether oder 3-Aminopropylvinylether eingesetzt.

Ganz besonders bevorzugt wird eine Partikelmischung auf die Oberfläche aufgebracht, die Partikel mit antimikrobiellen Eigenschaften aufweist. Es kann vorteilhaft sein, wenn die Partikelmischung eine Mischung von strukturbildenden, vorzugsweise hydrophoben Partikeln und Partikeln mit antimikrobiellen Eigenschaften aufweist, die einen Gehalt an Partikeln mit antimikrobiellen Eigenschaften von 0,01 bis 25 Gew.-%, vorzugsweise von 0,1 bis 20 Gew.-% und ganz besonders bevorzugt von 1 bis 15 Gew.-%, bezogen auf die Partikelmischung aufweist. Die Partikel mit antimikrobiellen Eigenschaften können selbstverständlich ebenfalls zur Strukturbildung beitragen. Die Partikelmischung muß so abgestimmt werden, dass die antimikrobielle Wirkung erzeugt wird, aber die für die Selbstreinigung notwendige Hydrophobie noch dominiert.

Das Aufbringen der Partikelmischung auf die Oberfläche zur Erzeugung der Oberflächenstruktur und der antimikrobiellen Eigenschaften kann z. B. so durchgeführt werden, dass das Trägersysteme, welches eine härtbare Substanz sein kann, durch Aufsprühen, Aufrakeln, Aufstreichen oder Aufspritzen auf eine Oberfläche aufgebracht wird. Vorzugsweise wird die härtbare Substanz in einer Dicke von 1 bis 200 µm, vorzugsweise in einer Dicke von 5 bis 75 µm aufgebracht. Je nach Viskosität der härtbaren Substanz kann es vorteilhaft sein, die Substanz vor einem Aufbringen der Partikel anhärten zu lassen. Idealerweise wird die Viskosität der härtbaren Substanz so gewählt, dass die aufgebrachten Partikel zumindest teilweise in die härtbare Substanz einsinken können, die härtbare Substanz bzw. die auf ihr aufgebrachten Partikel aber nicht mehr verlaufen, wenn die Oberfläche senkrecht gestellt wird.

Das Aufbringen der Partikel selbst kann z. B. durch Aufsprühen erfolgen. Insbesondere kann das Aufbringen der Partikel durch Aufsprühen unter Verwendung einer elektrostatischen Sprühpistole erfolgen. Nach dem Aufbringen der Partikel können überschüssige Partikel, also Partikel die nicht an der härtbaren Substanz haften, durch Schütteln, Abbürsten oder Abblasen von der Oberfläche entfernt werden. Diese Partikel können gesammelt und wiedereingesetzt werden.

Bei der bevorzugten Ausführungsart des erfindungsgemäßen Verfahren erfolgt das Fixieren der Partikel auf der Oberfläche durch Härten des Trägersystems, wobei dieses vorzugsweise durch thermische Energie und/oder Lichtenergie erfolgt. Besonders bevorzugt erfolgt das Härten des Trägersystems durch Lichtenergie. Vorzugsweise erfolgt das Härten des Trägers unter einer Inertgas-Atmosphäre, ganz besonders bevorzugt unter einer Stickstoffatmosphäre.

Das Trägersysteme muss transparent oder diffus transparent bzw. transluzent sein. Als Trägersysteme können insbesondere UV-härtbare, thermisch härtbare oder an der Luft härtende Coatingsysteme dienen. Unter Coatingsysteme fallen lackartige Mischungen aus einfach ungesättigten Acrylaten oder Methacrylaten mit mehrfach ungesättigten Acrylaten oder Methacrylaten, aber auch Mischungen der mehrfach ungesättigten Acrylate bzw. Methacrylate untereinander. Lacksysteme auf Urethanbasis gelten ebenfalls als Coatingsysteme. Die Mischungsverhältnisse können in weiten Grenzen variiert werden. Abhängig von der später zuzugebenden strukturbildenden Komponente, können weitere funktionelle Gruppen wie Hydroxygruppen, Ethoxygruppen, Amine, Ketone, Isocyanate oder ähnliche, aber auch fluorhaltige Monomere oder inerte Füllkomponenten, wie in Monomermischung lösliche Polymere, zugegeben werden. Die zusätzliche Funktionalität dient hauptsächlich der besseren Anbindung der Strukturbildner. Ferner können als Trägersysteme Reinacrylatdispersionen und PU-Lacksysteme (Polyurethan-Lacksysteme) verwandt werden. Es kann vorteilhaft sein, wenn das Trägersystem ebenfalls ein Material, welches antimikrobielle Eigenschaften aufweist, aufweist.

Als strukturgebende Partikel können hydrophobe- oder hydrophobierte Partikel eingesetzt werden, die zumindest ein transparentes und/oder transluzentes Material, ausgewählt aus Silikaten, dotierten oder pyrogenen Silikaten, Mineralien, Metalloxiden, Kieselsäuren oder Polymeren als Aggregat oder Agglomerat aufweisen. Besonders bevorzugt werden Partikel mit eingesetzt, die einen Partikeldurchmesser von 0,02 bis 100 µm, besonders bevorzugt von 0,1 bis 50 µm und ganz besonders bevorzugt von 0,3 bis 30 µm aufweisen. Es kann vorteilhaft sein, wenn Partikelmischungen mit zumindest zwei Fraktionen von Partikeln mit unterschiedlichen Partikelgrößen eingesetzt werden. Auf diese Weise lässt sich verhindern, dass sich gleichgroße Partikel regelmäßig anordnen und es somit zu Interferenzbildungen kommt. Vorzugsweise werden zumindest zwei Fraktionen eingesetzt, die einen Unterschied der mittleren Partikelgrößen mit einem Faktor von 2 bis 10, vorzugsweise von 4 bis 7 aufweisen. Ebenso ist es natürlich möglich, dass als Partikel eine oder mehrere Partikelfraktionen eingesetzt werden, die Partikel unterschiedlicher Größen aufweisen. Besonders vorteilhaft für die Vermeidung von Interferenzerscheinungen an den Oberflächen ist eine breite Verteilung der Partikelgröße. Eine Verteilung der Partikel zwischen 0,1 µm und 2µm verhindert hierbei die Entstehung von Interferenzerscheinungen an der Oberfläche fast vollständig. Hierbei ist es nebensächlich ob die Partikelgröße durch Zusammenlagern von Primärteilchen (Agglomeration) oder durch unterschiedliche Primärteilchengrößen entsteht.

Vorzugsweise weisen die Partikel zur Generierung der selbstreinigenden Oberflächen hydrophobe Eigenschaften auf. Die Partikel können selbst hydrophob sein, wie z. B. PTFE aufweisende Partikel, oder die eingesetzten Partikel können hydrophobiert worden sein. Das Hydrophobieren der Partikel kann auf eine dem Fachmann bekannte Weise, z. B. durch eine Behandlung mit zumindest einer Verbindung aus der Gruppe der Alkylsilane, Perfluoralkylsilane, Paraffine, Wachse, Fettsäureestern, funktionalisierte langkettige Alkanderivate oder Alkyldisilazane, erfolgen. Typische hydrophobierte Partikel sind z. B. Feinstpulver wie Aerosil R 974 oder Aerosil-R 8200 (Degussa AG), die käuflich zu erwerben sind.

Vorzugsweise werden solche hydrophoben, transparenten und/oder transluzenten Partikel, oder nachträglich hydrophobierte, transparente und/oder transluzente Partikel, die zumindest ein Material, ausgewählt aus Silikaten oder dotierten Silikaten, Mineralien, Metalloxiden, Metallmischoxiden, pyrogenen Kieselsäuren oder Fällungskieselsäuren oder Polymeren aufweisen, eingesetzt. Ganz besonders bevorzugt weisen die Partikel Silikate, pyrogene Kieselsäuren oder Fällungskieselsäuren, insbesondere Aerosile, SiO₂, TiO₂, ZrO₂ oder pulverförmige Polymere, wie z. B. kryogen gemahlenes oder sprühgetrocknet Polytetrafluorethylen (PTFE), auf.

Besonders bevorzugt werden transparente hydrophobe Partikel mit einer BET-Oberfläche von 50 bis 600 m²/g eingesetzt. Ganz besonders bevorzugt werden Partikel eingesetzt, die eine BET-Oberfläche von 50 bis 200 m²/g aufweisen.

Als Partikel mit antimikrobiellen Eigenschaften können Partikel eingesetzt werden, die Homopolymere oder Copolymere, hergestellt aus Methacrylsäure-2-tert.-butylaminoethylester, Methacrylsäure-2-diethylaminoethylester, Methacrylsäure-2-diethylaminomethylester, Acrylsäure-2-tert.-butylaminoethylester, Acrylsäure-3-dimethylaminopropylester, Acrylsäure-2-diethylaminoethylester, Acrylsäure-2-dimethylaminoethylester, Dimethylaminopropylmethacrylamid, Diethylamino-propylmethacrylamid, Acrylsäure-3-dimethylaminopropylamid, 2-Methacryloyloxyethyltrimethylammoniummethosulfat, Methacrylsäure-2-diethylaminoethylester, 2-Methacryloyloxyethyltrimethylammoniumchlorid, 3-Methacryloylaminopropyltrimethylammonium-chlorid, 2-Methacryloyloxyethyltrimethylammoniumchlorid, 2- Acryloyloxyethyl-4-benzoyldimethylammoniumbromid, 2-Methacryloyloxyethyl-4-benzoyldimethylammoniumbromid, 2-Acrylamido-2-methyl-1-propansulfonsäure, 2-Diethylaminoethylvinylether oder 3-Aminopropylvinylether aufweisen. Die Partikel können ganz aus dem antimikrobielle Eigenschaften aufweisenden Material bestehen oder das antimikrobielle Material als Beschichtung aufweisen. Besonders bevorzugt werden Partikel mit antimikrobiellen Eigenschaften eingesetzt, die einen Partikeldurchmesser von 1 bis 2000 µm, besonders bevorzugt von 20 bis 1000 µm und ganz besonders bevorzugt von 50 bis 500 µm aufweisen.

Die antimikrobiell wirkenden Partikel dürfen nicht hydrophobiert werden, da durch eine Belegung der Oberfläche mit einem Hydrophobierungsreagenz die antimikrobielle Eigenschaft verloren geht.

Die Partikel können auch als Aggregate oder Agglomerate vorliegen, wobei gemäß DIN 53 206 unter Aggregaten flächig oder kantenförmig aneinander gelagerte Primärteilchen (Partikel) und unter Agglomeraten punktförmig aneinander gelagerte Primärteilchen (Partikel) verstanden werden. Als Partikel können auch solche eingesetzt werden, die sich aus Primärteilchen zu Agglomeraten oder Aggregaten mit einer Größe von 0,02 - 100 µm zusammenlagern.

Es kann vorteilhaft sein, wenn die eingesetzten Partikel eine strukturierte Oberfläche haben. Vorzugsweise werden Partikel, die eine unregelmäßige Feinstruktur im Nanometerbereich auf der Oberfläche aufweisen, eingesetzt. Die Feinstruktur der Partikel ist vorzugsweise eine zerklüftete Struktur mit Erhebungen und/oder Vertiefungen im Nanometerbereich. Vorzugsweise weisen die Erhöhungen im Mittel eine Höhe von 20 bis 500 nm, besonders bevorzugt von 50 bis 200 nm auf. Der Abstand der Erhöhungen bzw. Vertiefungen auf den Partikeln beträgt vorzugsweise weniger als 500 nm, ganz besonders bevorzugt weniger als 200 nm. Vertiefungen, wie z. B. Krater, rissartige Einkerbungen, Kerben, Spalten, Löcher und Kavitäten unterstützen die wirksame Struktur der Partikel. Kombinationen der Vertiefungen, sowie weitere Strukturelemente in Form von Hinterschnitten, sind besonders bevorzugt, da sie die Wirksamkeit der erfindungsgemäßen Oberflächen verstärken.

Als Ausgangswerkstoff bzw. die Ausgangsoberfläche eines Werkstoffes kann zumindest eine Fläche eines Formkörpers, aus einem transparenten oder diffustransparenten Material, ausgewählt aus den Polymeren, wie z. B. Polyamiden, Polyurethanen, Polyetherblockamiden, Polyesteramiden, Polyvinylchlorid, Polyolefinen, Polysilikonen, Polysiloxanen, Polymethylmethacrylaten oder Polyterephthalaten sowie mineralischen Gläsern eingesetzt werden. Die Auflistung der polymeren Materialien ist nur beispielhaft und beschränkt sich nicht nur auf die gelisteten. Handelt es sich bei dem Formkörper um einen Formkörper aus Polymerem so kann es vorteilhaft sein, wenn dieser Formkörper, und damit die Oberfläche, ein Polymer mit antimikrobiellen Eigenschaften aufweist. Erfindungsgemäße Formkörper können sowohl Halbzeuge, geformte Gegenstände oder Körper, Folien, Platten, Scheiben oder ähnliches sein. Mittels des erfindungsgemäßen Verfahrens können erfindungsgemäße lichtstreuende Werkstoff erzeugt werden, die ein-, zwei- oder mehrseitig mit Oberflächenstrukturen, die selbstreinigende und lichtstreuende Eigenschaften aufweisen, ausgerüstet sind.

Das erfindungsgemäße Verfahren kann hervorragend zur Herstellung von lichtstreuenden Werkstoffen mit selbstreinigenden Eigenschaften eingesetzt werden. Solche lichtstreuenden Werkstoffe können z. B. als Dächer von Gewächshäusern, transparenten oder transluzenten Bedachungen, wie Bedachungen von Wintergärten, Bushaltestellen, Einkaufspassagen, Bohnhöfen oder Sportstadien, eingesetzt werden. Die erfindungsgemäßen lichtstreuenden Werkstoffe mit stochastischer Verteilung der Partikel haben insbesondere den Vorteil, dass sie eine gleichmäßige Lichtverteilung über die gesamte mit der Oberflächenstruktur ausgerüstete Oberfläche des Werkstoffes gewährleisten. Im Gegensatz zu herkömmlichen Gewächshäusern, die regelmäßig unter anderem von Laub und Staub aber auch von biologischem Material, wie z. B. Algen, gereinigt werden müssen, können Gewächshäuser, aus einem erfindungsgemäßen Werkstoff mit längeren Reinigungsintervallen betrieben werden.

Der erfindungsgemäße Werkstoff kann also als Oberlicht, transparente oder transluzente Bedachungen, wie Bedachungen von Wintergärten, Bushaltestellen, Einkaufspassagen, Bahnhöfen oder Sportstadien, Gewächshausverglasung oder zur Herstellung von Oberlichtern und Gewächshausverglasungen verwendet werden. Insbesondere transparente oder transluzente Bedachungen und Verglasungen die einen erfindungsgemäßen Werkstoff aufweisen, weisen die genannten Vorteile auf.

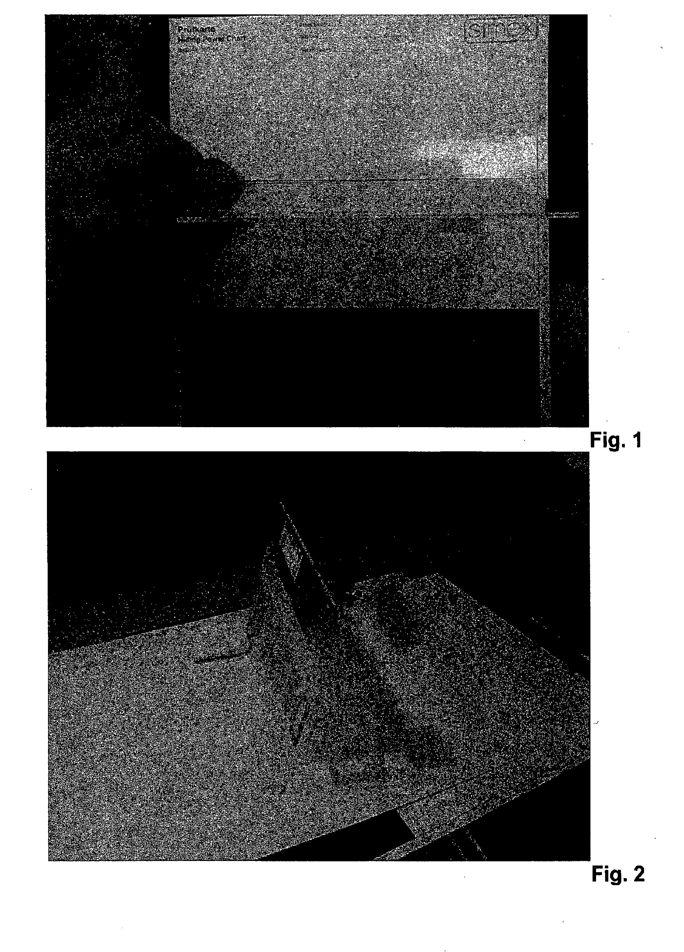

Die vorliegende Erfindung wird an Hand der Bilder (Figuren 1 und 2) näher erläutert, ohne dass die Erfindung auf diese Ausführungsarten beschränkt sein soll.

Fig. 1 zeigt ein Photo der Überprüfung der Schattenbildung gemäß Vergleichsbeispiel 2. Es ist deutlich zu erkennen, dass der Schriftzug einen lesbaren Schatten wirft.

Fig. 2 zeigt ein Photo der Überprüfung der Schattenbildung gemäß Beispiel 2. Es ist deutlich zu erkennen, dass der Schriftzug an denen Stellen, an denen die Platte erfindungsgemäß behandelt wurde, keinen lesbaren Schatten wirft.

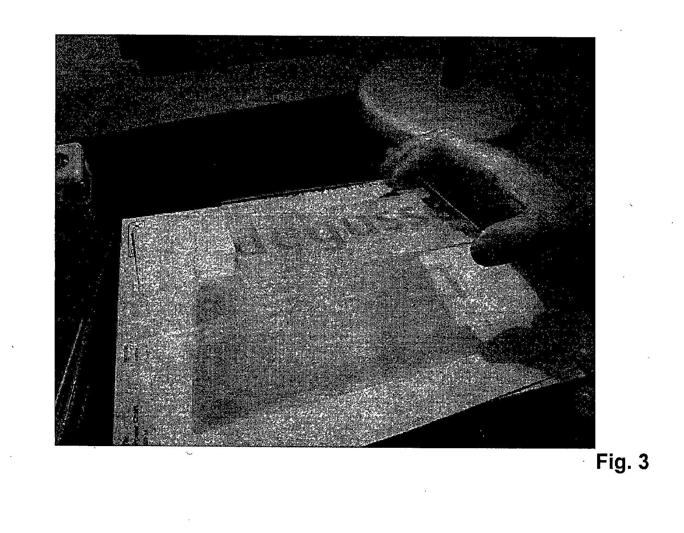

Fig. 3 zeigt ein weiteres Photo von der Überprüfung der Schattenbildung. Es ist deutlich zu erkennen, dass der Schriftzug keinen lesbaren Schatten wird.

Der erfindungsgemäße Werkstoff sowie ein Verfahren zu dessen Herstellung wird an Hand der nachfolgenden Beispiele näher erläutert, ohne dass die Erfindung auf diese Beispiele beschränkt sein soll.

### Beispiel 1:

20 Gew.-% Methylmethacrylat, 20 Gew.-% Pentaeritrittetraacrylat und 60 Gew.-% Hexandioldimethacrylat wurden miteinander vermischt. Bezogen auf diese Mischung werden 14 Gew.-% Plex 4092 F , ein acrylisches Copolymerisat der Röhm GmbH und 2 Gew.-% UV-Härter Darokur 1173 zugesetzt und mindestens 60 min lang gerührt. Auf ein extrudiertes Polymethylmethacrylat von 3 mm Plattenstärke wurde die hochvernetzende, UV-härtende Acrylatmischung in einer Dicke von 10 µm aufgetragen und anschließend mittels elektrostatischer Beschichtung Aerosil R 8200-Partikel aufgebracht. Diese Lack-Partikelbeschichtung wurde mittels UV-Strahlung bei einer Wellenlänge von 308 nm unter Stickstoff gehärtet.

### Die Schattenbildung wurde wie folgt beurteilt:

Die beschichtete PMMA-Platte wurde von oben mit einer Lichtquelle angestrahlt. Ein stabförmiger Formkörper wurde auf die Platte gelegt und die Platte mit dem aufgelegten Formkörper von der Lichtquelle in Richtung Tischoberfläche bewegt. Die Tischoberfläche war mit weißem Papier belegt. Anfänglich war keinerlei Kontur erkennbar. Erst mit starker Annäherung an das weiße Papier erschien ein Bereich auf dem Papier etwas dunkler, jedoch völlig konturlos. Selbst bei großer Nähe zu dem weißen Papier war keine scharfe Schattenbildung erkennbar.

### Vergleichsbeispiel 1:

Die Acrylat-Mischung aus Beispiel 1, jedoch ohne Partikel wurde auf eine PMMA-Platte aufgebracht und gehärtet.

Das Aufbringen eines stabförmigen Körpers liefert in allen Entfernungen zur Lichtquelle einen scharf abgegrenzten, beschatteten Bereich.

### Beispiel 2:

20 Gew.-% Methylmethacrylat, 20 Gew.-% Pentaeritrittetraacrylat und 60 Gew.-% Hexandioldimethacrylat wurden miteinander vermischt. Bezogen auf diese Mischung werden 14 Gew.-% Plex 4092 F , ein acrylisches Copolymerisat der Röhm GmbH und 2 Gew.-% UV-Härter Darokur 1173 zugesetzt und mindestens 60 min lang gerührt. Auf ein extrudiertes Polymethylmethacrylat von 3 mm Plattenstärke wurde die hochvernetzende, UV-härtende Acrylatmischung in einer Dicke von 10 µm aufgetragen und anschließend mittels elektrostatischer Beschichtung Aerosil R 8200-Partikel aufgebracht. Diese Lack-Partikelbeschichtung wurde mittels UV-Strahlung bei einer Wellenlänge von 308 nm unter Stickstoff gehärtet.

### Die Schattenbildung wurde wie folgt beurteilt:

Auf der der Beschichtung gegenüberliegenden Seite der Platte wurde ein Schriftzug aufgebracht. Die beschichtete PMMA-Platte wurde dann von schräg-oben mit einer Lichtquelle angestrahlt. Es konnte keine lesbaren Schatten des Schriftzuges beobachtet werden. (Fig. 2).

### Vergleichsbeispiel 2:

Der Versuch aus Beispiel 2 wurde wiederholt, jedoch wurden keine Partikel auf die PMMA-Platte aufgebracht. Bei der Überprüfung der Schattenbildung wurde ein lesbarer Schatten des Schriftzuges beobachtet (Fig. 1).

## Patentansprüche

1. Lichtstreuender Werkstoff auf Basis eines transparenten Werkstoffes mit einer künstlichen Oberflächenstruktur aus Erhebungen und Vertiefungen die eine partikuläre Beschichtung unter stochastischer Verteilung der Partikel an zumindest einer Oberfläche aufweist, wobei die Oberflächenstruktur lichtstreuende und selbstreinigende Eigenschaften und Erhebungen mit einer Höhe von 20 nm bis 100 µm und einem Abstand der Erhebungen von kleiner 100 µm aufweist.

2. Werkstoff gemäß Anspruch 1,
**dadurch gekennzeichnet,**
**dass** die Beschichtung antimikrobielle Eigenschaften aufweist.

3. Werkstoff gemäß Anspruch 1 oder 2,
**dadurch gekennzeichnet,**
**dass** die Oberfläche Partikel aufweist, die mittels eines Trägersystems auf der Oberfläche fixiert sind.

4. Werkstoff nach zumindest einem der Ansprüche 1 bis 3,
**dadurch gekennzeichnet,**
**dass** die Partikel aus einer Mischung von hydrophoben Partikeln und Partikeln mit antimikrobiellen Eigenschaften besteht.

5. Werkstoff nach zumindest einem der Ansprüche 2 oder 4,
**dadurch gekennzeichnet,**
**dass** das Material mit antimikrobiellen Eigenschaften zumindest ein antimikrobielles Polymer aufweist, welches aus zumindest einem Monomeren ausgewählt aus Methacrylsäure-2-tert.-butylaminoethylester, Methacrylsäure-2-diethylaminoethylester, Methacrylsäure-2-diethylaminomethylester, Acrylsäure-2-tert.-butylaminoethylester, Acrylsäure-3 -dimethylaminopropylester, Acrylsäure-2-diethylaminoethylester, Acrylsäure-2-dimethylaminoethylester, Dimethylaminopropylmethacrylamid, Diethylamino-propylmethacrylamid, Acrylsäure-3 -dimethylaminopropylamid, 2-Methacryloyloxyethyltrimethylammoniummethosulfat, Methacrylsäure-2-diethylaminoethylester, 2-Methacryloyloxyethyltrimethylammoniumchlorid, 3-Methacryloylaminopropyltrimethylammonium-chlorid, 2-Methacryloyloxyethyltrimethylammoniumchlorid, 2- Acryloyloxyethyl-4-benzoyldimethylammoniumbromid, 2- Methacryloyloxyethyl-4-benzoyldimethylammoniumbromid, 2-Acrylamido-2-methyl-1-propansulfonsäure, 2-Diethylaminoethylvinylether oder 3-Aminopropylvinylether hergestellt wurde.

6. Werkstoff nach Anspruch 4,
**dadurch gekennzeichnet,**
**dass** die Mischung der Partikel einen Gehalt an Partikeln mit antimikrobiellen Eigenschaften von 0,01 bis 25 Gew.-%, bezogen auf die Partikelmischung aufweist.

7. Werkstoff nach zumindest einem der Ansprüche 1 bis 6,
**dadurch gekennzeichnet,**
**dass** die Oberfläche zumindest eine Fläche eines Formkörpers aus einem transparenten Material, ausgewählt aus Polymeren, wie z. B. den Polyamiden, Polyesteramiden, Polycarbonaten, Polystyrolen, Polyvinylchlorid, Polyolefinen, Polysilikonen, Polysiloxanen, Polymethylmethacrylaten oder Polyterephthalaten, Polymerblends sowie mineralischen Gläsern ist.

8. Verfahren zur Herstellung von lichtstreuenden Werkstoffen mit einer künstlichen Oberflächenstruktur gemäß zumindest einem der Ansprüche 1 bis 7, die lichtstreuende und selbstreinigende Eigenschaften aufweist,
**dadurch gekennzeichnet,**
**dass** eine Oberflächenstruktur die Erhebungen mit einer Höhe von 20 nm bis 100 µm und einem Abstand der Erhebungen von kleiner 100 µm aufweist, durch Aufbringen einer partikulären Beschichtung unter stochastischer Verteilung der Partikel auf zumindest eine Oberfläche des Werkstoffes erzeugt wird

9. Verfahren nach Anspruch 8,
**dadurch gekennzeichnet,**
**dass** bei der Herstellung der Oberflächenstrukturen zumindest ein Material eingesetzt wird, welches antimikrobielle Eigenschaften aufweist.

10. Verfahren gemäß Anspruch 8,
**dadurch gekennzeichnet,**
**dass** die Oberflächenstruktur durch Aufbringen und Fixieren von Partikeln auf der Oberfläche erzeugt wird.

11. Verfahren gemäß Anspruch 10,
**dadurch gekennzeichnet,**
**dass** zum Fixieren ein Trägersystem eingesetzt wird.

12. Verfahren gemäß zumindest einem der Ansprüche 8 bis 11,
**dadurch gekennzeichnet,**
**dass** die Oberfläche, die Partikel und/oder das Trägersystem das antimikrobielle Material aufweist.

13. Verfahren nach Anspruch 11,
**dadurch gekennzeichnet,**
**dass** als antimikrobielles Material ein Polymer eingesetzt wird, welches aus zumindest einem Monomeren ausgewählt aus Methacrylsäure-2-tert.-butylaminoethylester, Methacrylsäure-2-diethylaminoethylester, Methacrylsäure-2-diethylaminomethylester, Acrylsäure-2-tert.-butylaminoethylester, Acrylsäure-3-dimethylaminopropylester, Acrylsäure-2-diethylaminoethylester, Acrylsäure-2-dimethylaminoethylester, Dimethylaminopropylmethacrylamid, Diethylamino-propylmethacrylamid, Acrylsäure-3-dimethylaminopropylamid, 2-Methacryloyloxyethyltrimethylammoniummethosulfat, Methacrylsäure-2-diethylaminoethylester, 2-Methacryloyloxyethyltrimethylammoniumchlorid, 3-Methacryloylaminopropyltrimethylammonium-chlorid, 2-Methacryloyloxyethyltrimethylammoniumchlorid, 2- Acryloyloxyethyl-4-benzoyldimethylammoniumbromid, 2-Methacryloyloxyethyl-4-benzoyldimethylammoniumbromid, 2-Acrylamido-2-methyl-1-propansulfonsäure, 2-Diethylaminoethylvinylether oder 3-Aminopropylvinylether hergestellt wurde.

14. Verfahren gemäß Anspruch 12 oder 13,
**dadurch gekennzeichnet,**
**dass** als Partikel eine Mischung aus transparenten und/oder transluzenten Partikeln, die zumindest ein Material, ausgewählt aus Silikaten, dotierten Silikaten, Mineralien, Metalloxiden, Kieselsäuren oder Polymeren aufweisen, und Homo- oder Copolymerpartikeln ausgewählt aus Methacrylsäure-2-tert.-butylaminoethylester, Methacrylsäure-2-diethylaminoethyl-ester, Methacrylsäure-2-diethylaminomethylester, Acrylsäure-2-tert.-butylamino-ethylester, Acrylsäure-3-dimethylaminopropylester, Acrylsäure-2-diethylaminoethyl-ester, Acrylsäure-2-dimethylaminoethylester, Dimethylaminopropylmethacrylamid, Diethylamino-propylmethacrylamid, Acrylsäure-3-dimethylaminopropylamid, 2-Methacryloyloxyethyltrimethylammoniummethosulfat, Methacrylsäure-2-diethylamino-ethylester, 2-Methacryloyloxyethyltrimethylammoniumchlorid, 3-Methacryloylamino-propyltrimethylammonium-chlorid, 2-Methacryloyloxyethyltrimethylammoniumchlorid, 2- Acryloyloxyethyl-4-benzoyldimethylammoniumbromid, 2- Methacryloyloxy-ethyl-4-benzoyldimethylammoniumbromid, 2-Acrylamido-2-methyl-1-propansulfon-säure, 2-Diethylaminoethylvinylether oder 3-Aminopropylvinylether aufweisen.

15. Verfahren gemäß zumindest einem der Ansprüche 12 bis 14,
**dadurch gekennzeichnet,**
**dass** die hydrophoben Partikel einen mittleren Primärpartikeldurchmesser von 5 nm bis 50 nm aufweisen.

16. Verfahren gemäß Anspruch 15,
**dadurch gekennzeichnet,**
**dass** die Primärpartikel weitestgehend agglomeriert oder aggregiert vorliegen und die Aggregate, bzw. Agglomerate Durchmesser von 20 nm bis 100 µm aufweisen.

17. Verfahren gemäß zumindest einem der Ansprüche 12 bis 16,
**dadurch gekennzeichnet,**
**dass** die Partikel mit antimikrobiellen Eigenschaften einen Durchmesser von 20 bis 2000 µm aufweisen.

18. Verfahren gemäß zumindest einem der Ansprüche 12 bis 17,
**dadurch gekennzeichnet,**
**dass** die Partikel eine unregelmäßige Feinstruktur im Nanometerbereich auf der Oberfläche aufweisen.

19. Verwendung von Werkstoffen gemäß zumindest einem der Ansprüche 1 bis 7 als Oberlichter, Gewächshausverglasung, transparente oder transluzente Bedachungen von Wintergärten, Bushaltestellen, Einkaufspassagen, Bahnhöfen oder Sportstadien, sowie Lichtelementen in der Tierhaltung oder Tierkäfige.

20. Oberlicht, das einen Werkstoff gemäß einem der Ansprüche 1 bis 7 aufweist.

21. Verglasung, die einen Werkstoff gemäß einem der Ansprüche 1 bis 7 aufweist.
